# EUROPEAN PATENT SPECIFICATION

(11) **EP 2 565 788 B1**
(45) Date of publication and mention of the grant of the patent: **17.05.2017**
(21) Application number: 11179782.5
(22) Date of filing: 01.09.2011
(51) Int. Cl.: G06F 9/50

(54) **Method and apparatus for selecting optimum computing resources**
Verfahren und Vorrichtung zur Auswahl der optimalen Rechnerressourcen
Procédé et appareil de sélection de ressources informatiques optimum

(43) Date of publication of application: 06.03.2013
(73) Proprietor: Fujitsu Limited, Kawasaki-shi, Kanagawa 211-8588 (JP)
(72) Inventor: Saksena, Radhika, Hayes, Middlesex UB4 8FE (GB)
(74) Representative: Wilding, Frances Ward

(56) References cited:
- ENIS AFGAN ET AL: "Grid Resource Broker Using Application Benchmarking", 29 June 2005 (2005-06-29), ADVANCES IN GRID COMPUTING - EGC 2005; [LECTURE NOTES IN COMPUTER SCIENCE;;LNCS], SPRINGER-VERLAG, BERLIN/HEIDELBERG, PAGE(S) 691 - 701, XP019012035, ISBN: 978-3-540-26918-2 pages 691-701, * abstract * * page 691, paragraph 1 * * page 695, paragraph 2 - page 696, paragraph 2 * * page 698; table 1 *

## Description

This invention lies in the field of task allocation in distributed networks and in particular relates to a method and apparatus for selecting an optimum computing resource from among one or more available resources for performing a task.

It is desirable to perform computational applications on a computing resource that is best tuned for that application, and similarly to tune computational applications to suit the computing resource on which they are to be performed. It is becoming increasingly difficult to tune computational applications in the new era of heterogeneous computing where computational systems (resources) may comprise hybrid nodes composed of varying types of processor architectures, with tuneable clock frequencies of individual cores, each with heterogeneous power consumption and which can be dynamically turned on or off. The computational applications to be deployed on these heterogeneous architectures are also growing in complexity so that a single task can be composed of multiple coupled application instances which are ideally suited to different architectures, yet may need to be run concurrently or sequentially.

ENIS AFGAN ET AL: "Grid Resource Broker Using Application Benchmarking", 29 June 2005 (2005-06-29), ADVANCES IN GRID COMPUTING - EGC 2005; [LECTURE NOTES IN COMPUTER SCIENCE;;LNCS], SPRINGER-VERLAG,

BERLIN/HEIDELBERG, PAGE(S) 691 - 701, XP019012035, ISBN: 978-3-540-26918-2 pages 691-701, discloses a general-purpose resource broker that performs application specific resource selection on behalf of a user through a web interface. A matching resource is selected based on user specified criteria and application performance characteristics on the resources.The invention is set out as in independent method claim 1, corresponding system claim 13 and corresponding computer program claim 14. With increasing numbers of computational tasks being performed on third-party resources such as commercial clouds or grids, or in high-performance computing (HPC) environments in which there are several available computing resources with heterogeneous processor and system architectures, it is also likely that the end user, or other user or apparatus requesting performance of a task, may not have knowledge of the detailed architecture of the specific resource on to which his application is going to be scheduled (allocated). For example, he might know about the processor family but not the operating clock frequency, or may not have information about the interconnect topology (for example, mesh, torus, sub-torus or fat-tree) which will be available to the job or he may not have knowledge of the memory hierarchy or memory-related limits in operation. It was noted by academics benchmarking scientific codes on certain commercial cloud resources that a throttling mechanism is sometimes used to limit resource usage so that application performance degrades severely when memory requirements exceed the capacity of particular cache layers. This is to be expected as Cloud resources are intended to be shared by many different and unrelated applications including the possibility of partitioning of cores within a single multi-core socket among disparate applications to maximize resource utilization. It is thus very time-consuming and difficult for an end user to manually tune his computing applications (particularly, computationally demanding applications) for all the possible architectures that are available and on which the task or job (computational application instance or instances) may eventually run; and then to make a final selection of resource for the production run.

As increasingly more computational workload is moved to third-party computational resource providers, performed in centralised data centres, or as more complex applications require HPC environments, the end user has correspondingly less and less foresight of the scheduling of his task. That is to say, queue wait times involved before the desired resource can be assigned to the task are difficult to predict. This difficulty becomes even more troublesome for ensemble type jobs comprising running hundreds or thousands of (computationally intensive) instances of an application (e.g. in HPC, ensemble type simulations are performed to improve statistical sampling and consequently, the accuracy of the simulated phenomena). This is a particular problem in ensemble type jobs in which the overall time-to-solution may be limited by the slowest running application instance. For example, parameter searches in scientific applications often require completion of hundreds of application instances in order to identify regions of interest in parameter space. Furthermore, the scheduling/queue wait times for the desired resources may also vary with time depending on varying load on the selected computational resources.

Selecting a computational resource on which to perform application instances belonging to a task is difficult because an application instance may begin running on a particular resource immediately after being submitted on a first occasion, whereas on a second occasion the same resource, which is still just as well-tuned to perform the application, might have a longer queue wait time. Therefore, the shortest time-to solution may depend not only on the pure computational performance of the application instance on that computing resource, but also on the queue wait times on that resource at runtime. In this scenario, simply tuning the application purely for computational performance on a particular resource architecture, may not guarantee optimal performance as compared to another resource which has slower computational performance but much shorter queue wait times.

The performance statistics obtained based on the benchmarking set of inputs generated in the method according to the present invention are application instance specific. This is advantageous relative to relying on published benchmarking statistics because it ensures that the most suitable resource is chosen not merely for the application, but for the particular instance of the application. The selection of an optimum resource on which to perform the application instance can be tailored to take into account the different resource requirements occurring between different instances of the same application.

An additional advantage of the method embodying the present invention is that performance statistics are received based on benchmarking performed when the task has been received by the computing resource selection system and is ready to be allocated, so performance statistics such as queue wait time are as current as possible.

Preferably, the values of the identified set of inputs are adjusted in such a way that an execution time of the application instance is reduced. It is advantageous if the benchmarking set of inputs are such that they enable performance statistics to be received from the candidate computing resources quickly, whilst bearing in mind the conflicting requirement of the performance statistics being an accurate indicator of how the application instance itself will be performed. A quick benchmarking process ensures that overall computing resource use is minimised, that the task can be performed soon after its details are sent to the computing resource selection system, and that performance statistics are as current as possible.

Optionally, methods embodying the present invention may further comprise transmitting a message identifying the selected optimum computing resource to the input source. Such a message may also include performance statistics received from the candidate computing resources and/or estimated performance statistics for the execution of the application instance. Such information may be included for the selected computing resource only, or for each of the candidate computing resources. Advantageously, providing the input source with a message identifying the selected optimum computing resource enables the input source to allocate the job, or application instance within the job, to the best-suited computing resource from among the candidate computing resources.

Optionally, methods embodying the present invention may further comprise transmitting the complete set of inputs to the selected computing resource for running the application instance. Advantageously, sending the complete set of inputs to the selected computing resource is efficient in terms of bandwidth, since the selected computing resource already has an executable version of the application (used for benchmarking), so once selection has been performed, the task can be allocated merely by transmitting the complete set of inputs. Alternatively, the computing resource selection system may send only information required to convert the benchmarking set of inputs into the complete set of inputs.

In methods embodying the present invention, the performance statistics may optionally include execution time. Alternatively or additionally, performance statistics may include time to solution, time to solution being a sum of the queue wait time and the execution time, in which the queue wait time is the queue wait time which would be expected for the application instance with the complete set of inputs. The execution time may be used to obtain an estimate of the application instance execution time, for example by extrapolation or heuristically (based on stored benchmarking and actual execution times for the application running on that resource). Advantageously, having the time to solution statistics will enable the selection of the optimum computing resource to be based on which of the candidate resources will complete the application instance soonest. This is beneficial as compared to being based merely on estimated application instance execution time, since a long queue wait time may mean that a candidate computing resource which is able to complete the execution of the application instance very quickly, may not actually generate a solution until after another candidate computing resource with a slower execution speed.

Optionally, in methods embodying the present invention the task may include running a plurality of application instances, the task details may include information identifying an application and application source code for each application, and a complete set of inputs specific to each application instance, and the identifying, generating, transmitting, receiving, and selecting steps are performed for each application instance in the task. Advantageously, selecting an optimum computing resource on which to perform each application instance of a complex task means that the requirements of each individual application instance can be separately considered. Furthermore, when compared with a method in which computing resources on which to perform application instances are selected on a per-application basis, a situation in which the overall time-to-solution is delayed by queuing of instances of a particular resource at a single computing resource may be avoided. Whilst the particular steps which are to be repeated are individually recited above, it should be understood that the repetition includes all steps required to select an optimum computing resource for each application instance. Furthermore, where a plurality of application instances are very similar, it may be possible to perform the identifying step, for example, only once on behalf of that plurality of application instances.

Optionally, methods embodying the present invention may further comprise, at the computing resource selection system, generating at least one additional benchmarking set of inputs, transmitting the at least one additional benchmarking set of inputs to the one or more candidate computing resources for benchmarking, receiving, from the or each of the one or more candidate computing resources, additional performance statistics for each of the at least one additional benchmarking set of inputs, and using the additional performance statistics along with the performance statistics to select an optimum computing resource. Advantageously, such methods enable accurate estimates of performance statistics for the execution of the application instance to be derived from the performance statistics received after the benchmarking is performed. For example, the effect of anomalies occurring due to adjusting an input in a particular way may be minimised by the presence of a more reliable result based on a different adjustment of the same input. Furthermore, the accuracy of the estimated performance statistics should benefit from the increased sample size of benchmarking performance statistics. There are different ways in which the additional benchmarking set of inputs can be generated, for example, by adjusting the identified set of inputs in a different way, or by identifying different inputs for adjustment, which may be achieved by using a different method for identifying the inputs that affect the execution time of an application instance. Some different methods are set out below.

Optionally, identifying the set of inputs which affect an execution time includes performing a semantic analysis of the complete set of inputs and identifying those inputs which comprise a parameter name which matches a predefined list of parameter names to within a predetermined error threshold. Such methods provide a simple and efficient means by which to identify those inputs which affect the execution time of an application instance so that the time required to perform the benchmarking process can be reduced. Other means by which to identify inputs which affect the execution time of an application instance may be used additionally or alternatively. The predetermined error threshold may be, for example, a specified number of letters that can differ from the listed parameter name, and alternatively or additionally, a wildcard system could be used so that a section of a name must match, but any string of text can appear before and/or after. The extent to which parameter names of the complete set of inputs must match the listed parameter names can be iteratively relaxed each time an analysis is performed and no inputs are identified.

Optionally, identifying the set of inputs which affect an execution time includes analysing the application source code and the complete set of inputs to find loop control variables in the application source code whose value is set as a direct function of an input from the complete set of inputs, and including that input in the identified set of inputs. Advantageously, such methods provide a means by which to identify those inputs which affect the execution time of an application instance which is not language-dependent and is robust, yet relatively simple to execute and efficient in terms of processing requirements. Of course, this method is particularly suitable when the parameters are not named in the complete set of inputs. As above, other means by which to identify inputs which affect the execution time of an application instance may be used additionally or alternatively.

As a further option, identifying the set of inputs which affect an execution time may include finding a first set of variables whose value is set as a direct function of an input from the complete set of inputs, finding a next set of variables whose value is set as a direct function of a variable from the first set of variables, and, if any of the first set of variables or the next set of variables are loop control variables, adding their corresponding inputs to the identified set of inputs, and for a preconfigured number of iterations: defining the next set of variables as a previous set of variables; finding a new next set of variables whose value is set as a direct function of a variable from the previous set of variables, and, if any of the next set of variables are loop control variables, adding their corresponding inputs to the identified set of inputs. Such a method provides another means by which to identify those inputs which affect the execution time of an application instance which may also be used as an alternative or in addition to the other such means. This particular means is advantageous because the level at which the application source code is searched for variables is configurable, so that control between being thorough and processing requirements is maintained. Furthermore, identifying not only those loop control variables which are a direct function of the inputs, but also those which are indirectly derived from the inputs, means that a high proportion of the controllable iterative sections of code can be identified, and the time required for performing the benchmarking can be reduced further. The preconfigured number of iterations can be 0 or any positive integer.

As a further additional or alternative means for by which to identify those inputs which affect the execution time of an application instance so that the time required to perform the benchmarking process can be reduced, the computing resource selection system may have a storage unit for storing rules for identifying inputs which affect the execution time of an application instance from among a complete set of inputs, and identifying the set of inputs may then include using rules from the storage unit to find a set of inputs which affect the execution time of an application instance. For example, there may be widely-used standard applications in a distributed network environment, such as Amber or NWChem. This means is particularly advantageous in environments in which the same applications are executed frequently, for example an HPC environment for a particular research facility. Rules enable a level of complexity to be built into the process of identifying inputs which affect the execution time of an application instance, for example by using application-specific knowledge.

As a further development of the previously-discussed means for identifying those inputs which affect the execution time of an application instance, the method includes the step of deriving rules for identifying inputs that affect an execution time of the application instance based on the received complete set of inputs and an example benchmarking set of inputs, and storing the rules in the storage unit. Advantageously, such a method enables the input source to perform pattern matching on received complete/benchmarking input set pairs in order to learn rules which can then be applied to complete input sets for application instances of the same application on a future occasion.

Optionally, methods embodying the present invention include, at the computing resource selection system, building the application using the application source code and build instructions, including configuring the application for the specification of the candidate computing resource. The build instructions may be received as part of the task details, or may be obtained from a local or remote storage unit by the system. Advantageously, compiling the application executable at the computing resource selection system itself will reduce the load on the candidate computing resources. In an alternative embodiment, building the application is performed by the candidate computing resources themselves, the build script being supplied to them from the computing resource selection system. Configuring may be performed during the build or afterwards.

The computing resource selection system may be operable to configure the application for different computing resource specifications. The manner of the configuration may be derived from knowledge the system has about a particular resource on which the application is to be benchmarked and potentially run if the resource is eventually selected. Alternatively or additionally, configuration rules or a configuration script may be stored in the system, or obtainable from a remote storage unit. Alternatively, some of the configuration may be achieved by running a configuration script included as part of the task details. This configuration script may be sent to the candidate computing resources by the computing resource selection system if they are to compile the application themselves. Advantageously, a configuration script enables an application to be tailored to a particular resource architecture or specification. The different methods for configuring the application may be combined.

According to an embodiment of another aspect of the present invention, there is provided a computing resource selection system configured to operate in a distributed computing environment, the computing resource selection system comprising a reception unit configured to receive, from an input source, task details of a task to be performed by a computing resource, wherein the task includes running an application with a given set of inputs as an application instance, and the task details include information identifying the application and application source code, and a complete set of inputs specific to the application instance; an identification unit configured to identify, from among the complete set of inputs, a set of inputs which affect an execution time of the application instance; a benchmarking input set generation unit configured to generate a benchmarking set of inputs by adjusting values of the identified set of inputs; a transmission unit configured to transmit the benchmarking set of inputs and the application to one or more candidate computing resources for running the application with the benchmarking set of inputs as a benchmarking process; wherein the reception unit is also configured to receive, from the or each of the one or more candidate computing resources, performance statistics of the benchmarking process. The computing resource selection system further comprising a selection unit configured to select an optimum computing resource to run the application instance using the performance statistics from the one or more candidate computing resources, based on a selection policy.

According to embodiments of another aspect of the present invention, there is provided a computer program which, when run by a computing apparatus in a distributed computing environment, causes the computing apparatus to perform a method in distributed network computing, the method comprising, at a computing resource selection system, receiving, from an input source, task details of a task to be performed by a computing resource, wherein the task includes running an application with a given set of inputs as an application instance, and the task details include information identifying the application and application source code, and a complete set of inputs specific to the application instance; identifying, from among the complete set of inputs, a set of inputs which affect an execution time of the application instance; generating a benchmarking set of inputs by adjusting values of the identified set of inputs; transmitting the benchmarking set of inputs and the application to one or more candidate computing resources for running the application with the benchmarking set of inputs as a benchmarking process; receiving, from the or each of the one or more candidate computing resources, performance statistics of the benchmarking process; and selecting an optimum computing resource to run the application instance using the performance statistics from the one or more candidate computing resources, based on a selection policy.

Embodiments of the present invention can provide an end user or other input source with recommendations for (third-party) computational resources which are optimal (optimality is relative to the other candidate computing resources and could mean, for example, best price to performance ratio, smallest CO2 footprint or other cost-based and green targets, etc.) for the application instance. Since the method collects on-demand performance data, details such as cost values and green metrics for the end user's application instance on various third party computational resources, it could provide an additional service such as negotiating with resource providers on the user's behalf so as to obtain a desired (perhaps more reputable or more geographically local) resource to run his application instance at a lower cost. The definition of optimality can be built into the selection policy.

Embodiments of the present invention enable tuning of high performance computational applications not merely by tuning the application code for a particular target computational resource, as is known conventionally, but instead (or in addition to code-tuning) by selecting the most optimal target resource out of available resource(s) in an environment, based on some or all of (a) on-demand build and configuration of the application instance and (b) dynamic application instance-specific benchmarks (i.e. benchmarks-on-demand rather than previously determined benchmarks on different applications or same application but with inputs that are different from the input deck of the application instance being scheduled) without the need for manual tuning of the application by the end user. The benchmark driven approach of embodiments of the present invention is not application specific but rather application instance-specific. This technique of tuning the computational resource selection to the application instance, instead of the conventional approach of tuning the application to the resource, is relevant to Cloud-based resources, where a wide variety of heterogeneous target resources are available and furthermore, are not owned by the end user so that hand tuning may in fact be impossible.

Preferred features of the present invention will now be described, purely by way of example, with reference to the accompanying drawings, in which:-
Figure 1 illustrates a method embodying the present invention;
Figure 2 is a diagrammatic representation of a distributed computing environment in which part of a method embodying the present invention is being performed;
Figure 3 is a diagrammatic representation of a distributed computing environment in which another part of a method embodying the present invention is being performed;
Figure 4 is a flowchart representing a method comprising an embodiment of the present invention;
Figure 5 is an illustration of a computing resource selection system embodying the present invention;
Figure 6 is a flowchart representing a first method for identifying inputs that affect execution time from among the complete set of inputs;
Figure 7 is a flowchart representing a second method for identifying inputs that affect execution time from among the complete set of inputs;
Figure 8 is an illustration of an alternative configuration of a computing resource selection system embodying the present invention.

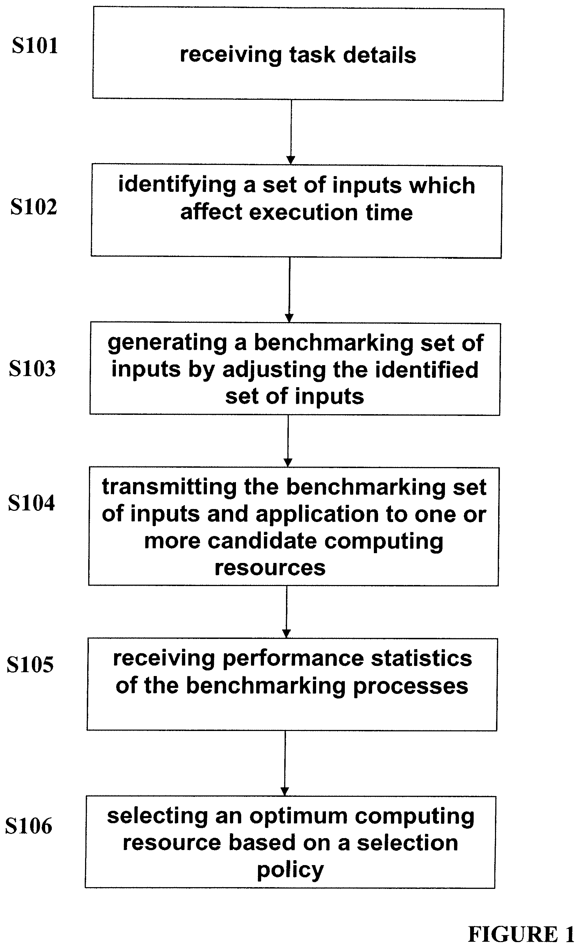

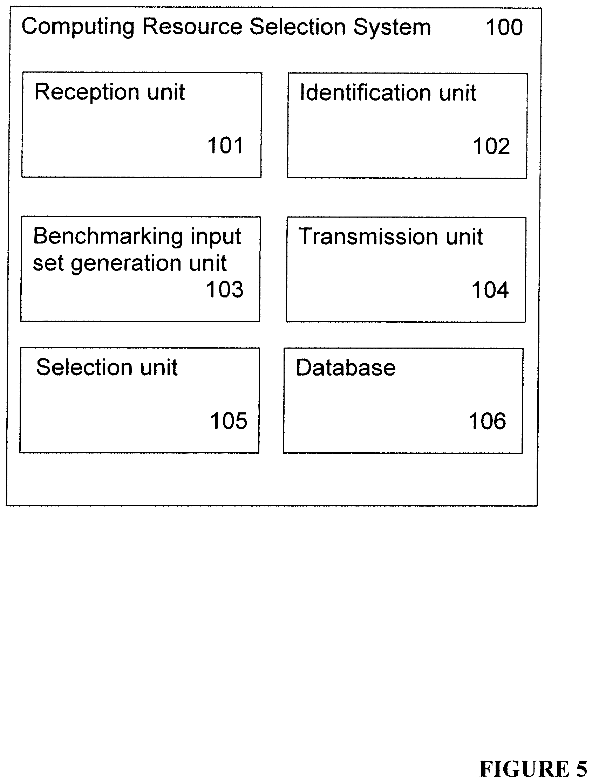

Figure 1 is a flowchart of a method embodying the present invention. Methods embodying the present invention may be performed by an apparatus such as that represented in Figure 5. The apparatus of Figure 5 may be realised by one or more separate computing apparatuses. In particular, the transmission unit 104 and reception unit 101 should be configured to provide a data connection to and from an end user and one or more computing resources.

At step S101, the computing resource selection system receives, from an input source, task details of a task to be performed by a computing resource, wherein the task includes running an application with a given set of inputs as an application instance, and the task details include information identifying the application and application source code, and a complete set of inputs specific to the application instance. This step may be performed, for example, at a reception unit 101.

The computing resource selection system may be a single computing apparatus, or may be a service run across a plurality of networked computing apparatuses. In terms of the distributed network computing environment in which the method is put into operation, the environment may be a broadly distributed environment such as the cloud, and may encompass more than one cloud computing resource provider. Alternatively, the environment may be one or a plurality of data centres, or one or more high performance computing resources each including at least one computing resource on which application executables may be run.

The input source may be an end user or remote computer at which task details of the task to be performed have been entered and/or stored. The input source may be seeking to obtain an identification of an optimum computing resource to which a task should be sent for execution, or may be seeking to allocate the task via the computing resource selection system, so that having sent the task details to the computing resource selection system, the next involvement of the input source will be receiving the results of execution of the task. Of course, it may be that the input source and the destination of the results are not the same computing apparatus or user.

The complete set of inputs may also be referred to as an "input deck", "(full) production input deck", "input dataset", or "input parameters". The set of inputs may be a list of parameters with values, whether those values be alphanumerical or otherwise. It may be that, for a particular application, the parameter format is standardised, so that the set of inputs in merely a list of unnamed values. There may be additional complexity to the dataset such as conditional values.

Information identifying the application and application source code may include the application source code itself, or may be merely an ID (such as a name and version number), recognisable by the computing resource selection system and attributable to a particular application and version of the application source code. The computing resource selection system may have applications and/or their source code stored in a local or remote storage unit.

The complete set of inputs are complete insofar as they provide at least the minimum amount of information the application requires in order to run, and as such are specific to a particular instance (run or execution) of the application. It may be that some of the inputs are optional, because the application may use default inputs if the given set of inputs are null in the relevant respect. Any such inputs would not necessarily be required to be part of a complete set of inputs.

At step S102, the computing resource selection system identifies, from among the complete set of inputs, a set of inputs which affect an execution time of the application instance. This step may be performed, for example, at an identification unit 102.

At step S103, the computing resource selection system generates a benchmarking set of inputs by adjusting values of the identified set of inputs. This step may be performed, for example, at a benchmarking input set generation unit 103.

The identified set of inputs which affect an execution time of the application instance may include those inputs which control how many times a particular section of code, or the logic derived from a particular section of code, is executed. For example, the number of times which a loop is iterated may be controlled by an input. Additionally, inputs may control a convergence value of a variable calculated in a loop, so that adjusting the convergence value has the effect of reducing the number of times the loop is repeated. In addition, there may be inputs which control the number of iterations of more than one loop. There may also be inputs that are taken to be indicative of the values which should be used for a plurality of loop control variables. For example, an application may be run with "Detail_level=high/medium/low". Wherein there are a plurality of loops of code which are performed a greater number of times when Detail_level is set to high than they are when Detail_level is medium, and so on. It may be that the identified inputs which affect an execution time of the application instance are not only those which will necessarily affect the execution time, but also those which have the potential to affect the execution time. Whether they have an effect, or the extent to which they have an effect, may depend upon other unforeseeable conditions calculated during the execution of the application.

The adjusting is performed in such a way that it will reduce the execution time of the application instance, so that running the application with the benchmarking set of inputs will be quicker than running the application with the complete set of inputs (assuming all other factors are the same). For example, numbers of iterations of sections of code can be reduced, target error margins can be made bigger, and durations can be reduced.

At step S104, the computing resource selection system transmits the benchmarking set of inputs and the application to one or more candidate computing resources for running the application with the benchmarking set of inputs as a benchmarking process. This step may be performed at, for example, a transmission unit 104.

The benchmarking set of inputs may include only the identified set of inputs with their adjusted values, or may also include some or all of the remaining inputs from the complete set whose values were not adjusted. Of course, it may be that all of the inputs were identified as affecting the execution time, in which case there would not be any remaining inputs.

The application sent to the candidate computing resource(s) may be sent as an application executable which has been compiled by the computing resource selection system, or obtained from local or remote storage by the computing resource selection system as an application executable. Alternatively the application may be in the form of application source code and build instructions for the source code so that the candidate computing resources can perform the build or compilation themselves.

The candidate computing resources may be included on a preconfigured list of candidates at the computing resource selection system. Alternatively, it may be that the task details include a list of candidate computing resources. As a further alternative, the computing resource selection system may be configured to send out a message to a plurality of candidate computing resources, potentially including some task details in the message, to identify those computing resources with capacity to perform the task, or that are accepting tasks for benchmarking and/or performance. Another alternative is that the task details may include some broad criteria for the performance of the task, such as a maximum time-to-solution, maximum CO₂ emission, or some other restriction (such as a geographical or particular technical attribute) on the candidate computing resources. The computing resource selection system may then apply those broad criteria either to stored information about a plurality of computing resources, or to knowledge acquired via messaging a plurality of computing resources accordingly, to come up with a list of one or more candidate computing resources.

At step S105, the computing resource selection system receives, from the or each of the one or more candidate computing resources, performance statistics of the benchmarking process. This step may be performed at, for example, a reception unit 101, which may be the same or separate from the reception unit 101 at which the task details are received. The performance statistics of the benchmarking process are used as they are to select an optimum computing resource, or they are used to derive or calculate estimated performance statistics for running the application instance (that is, running the application with the complete set of inputs). Either or both of the performance statistics and the estimated performance statistics may be stored along with, for example, an identification of the application, an identification of the candidate computing resource, and the complete and/or benchmarking sets of inputs, for use in future task allocation procedures. The storage unit into which such information is stored may be local or remote.

The performance statistics received from the candidate computing resources should be sufficient for the computing resource selection system to apply a selection policy to the statistics, or to information derived from the statistics, to select the optimum computing resource. To this end, it may be that the task details include an indication, or full details, of the selection policy which the computing resource selection system should apply. For example, it could be a simple indication of a criterion, such as CO₂ emission level, time to solution, execution time, or cost. Alternatively, it could be a combination of several criteria, for example, the quickest time to solution that can be provided with CO₂ emission levels below an upper threshold. The computing resource selection system may be configured to derive which performance statistics are required from the candidate computing resources in order to apply the selection policy, and to request those performance statistics specifically when sending the benchmarking set of inputs. Alternatively, the performance statistics which the candidate computing resources send to the computing resource selection system may be standardised or preconfigured.

At step S106 the computing resource selection system selects an optimum computing resource to run the application instance using the performance statistics from the one or more candidate computing resources, based on a selection policy. This step may be performed at, for example, a selection unit 105.

In order to apply the selection policy to the performance statistics, the computing resource selection system may be configured to extrapolate the performance statistics to obtain estimated performance statistics for the application instance. For example, the extrapolation may be based on the relationship between the identified set of inputs pre and post adjustment. Alternatively, the extrapolation may be heuristic, based on a stored pairs of benchmarking performance statistic, and performance statistics from the actual execution of an application instance by the candidate resource in question. In an alternative configuration, the extrapolation is performed at the candidate resources themselves.

The selection policy may be based on one or more factors including execution time, time-to-solution, price to performance ratio, CO₂ footprint etc. The factors may be weighted in the process of selecting the 'optimum' computing resource. Furthermore, the input source may specify a threshold of acceptability for any of the factors. For example, a maximum tolerable time-to-solution. Therefore, a computing resource which was the best overall candidate computing resource, but which exceeded the maximum tolerable time-to-solution, would not be considered the 'optimum' computing resource. The leading candidate computing resource that satisfied the maximum tolerable time to solution would be selected as the optimum computing resource instead. Developments of this strategy can be included in invention embodiments, for example, if none of the candidate computing resources can provide a time-to-solution that is tolerable for the end-user, then a message may be sent to the end user enabling the end user to (a) revise the tolerance value, or (b) choose to proceed with one of the candidate computing resources (for example the candidate computing resource which is otherwise considered 'the best' based on the selection policy).

The selection policy may also take into account additional factors such as reputation ratings of the candidate computing resources, or particular quality of service offerings.

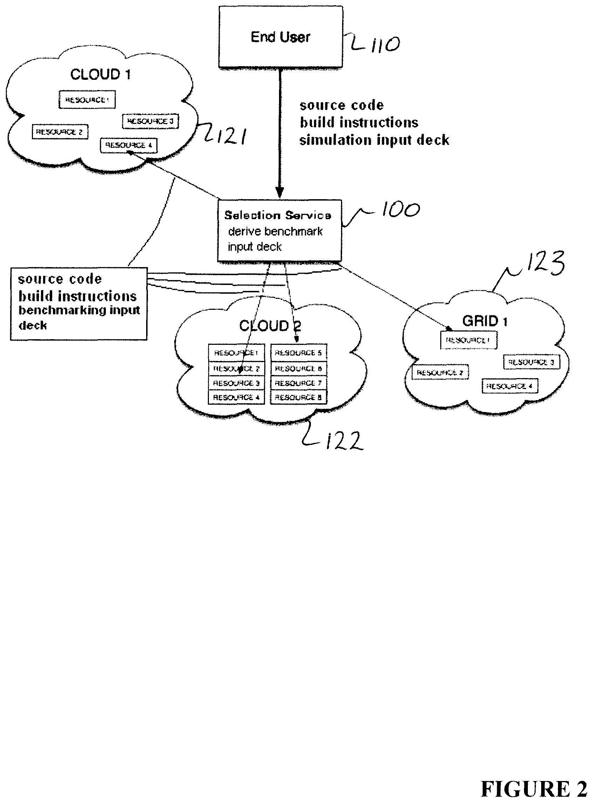

Figure 2 illustrates a distributed computing environment including a selection service 100 as an example of a computing resource selection system. The selection service 100 may be hosted on one or more machines (computing apparatuses). The environment also includes an end user 110, and a plurality of cloud or grid computing resources 121, 122, 123. The end user 110 may be a user at a machine, or may be some other machine or service. The end user could, for example, be a computational scientist wanting to run a high performance computing application on an appropriate resource on the Cloud or on a grid. The end user has a task including at least one application instance for which a solution (the outcome resulting from executing the application instance) is sought. The separation of the cloud and grid computing resources into three groups 121, 122, 123, illustrates that the computing resources considered for running the application instance could be at different geographical locations or just different machines at a single location, run by different providers, or any other distinct resources (hardware). It may be that the resources are accessed via interfaces across different levels of a system architecture, and these interfaces may also be considered to be part of the resource. Each cloud and grid resource in Figure 2 comprises more than one separate resource, so that they may be considered groups of resources. It may be the case that particular groups of resources contain two or more identical resources. However, the benchmarking process may still be performed at each of the resources, since some performance statistics will depend not only on the system specification, but on the load at the resource at the time of performance.

The or each of the candidate computing resources may perform the benchmarking and gather corresponding performance statistics, and transmit the performance statistics to the computing resource selection system. The performance statistics may have been extrapolated from the benchmarking performance statistics prior to transmission, or extrapolation may be performed at the computing resource selection system.

The arrow from the end user 110 to the selection service 100 illustrates the transmission of the task details over a data connection from the end user 110 to the selection service 100. In the embodiment illustrated in Figure 2, the end user 110 is sending application source code, build instructions, and a simulation input deck (complete set of inputs) to the selection service. The simulation input deck may also be considered to be a complete set of inputs, a full production input deck, or a target production deck. Build instructions may be in the form of a Makefile, build script, and may include or be provided in addition to a configure script. The information sent from the end user 110 to the selection service 100 may be referred to as 'task details'. The receipt of the task details at the selection service 100 is an example of step S101.

The selection service 100 is configured to perform steps S102 and S103 in order to derive a benchmark input deck from the received task details. Examples of particular methods which could be employed by the selection service 100 in order to generate the benchmarking set of inputs are provided below.

The arrows from the selection service 100 to the resources within the clouds and grids 121, 122, 123, are indicative of the transmission of the benchmarking set of inputs and a form of the application to candidate computing resources. The transmission is an example of step S104. The benchmarking set of inputs and the application is only sent to a subset of the available computing resources. It may be that some broad criteria have been pre-applied by either the end user 100, or the selection service 100, based on stored or acquired knowledge about the computing resources in order to narrow down to a subset of candidate computing resources from all of the available computing resources. The broad criteria could be included in the task details transmitted from the end user 110 to the selection service 100, and may include a criterion such as upper cost limit or geographical location for selecting a set of candidate computing resources from available computing resources. Optionally, the end user may also provide more stringent criteria which can be taken into account in the selection policy, for example, longest tolerable time to solution, maximum cost, minimum disk requirements, minimum network bandwidth requirements etc.

The application executable is then dynamically built or compiled at the candidate computing resources from the application source code and build instructions supplied by the selection service 100. Optionally, the application executable is configured for the specification of a particular candidate resource in accordance with a configuration script supplied by the end user 110 or the selection service 100.

In addition to build and/or configuration instructions specified by an input source (end user), for any candidate computing resource, invention embodiments may be configured to insert some resource specific optimization instructions into an end-user specified Makefile, build script or configure instructions. These resource-specific optimizations might have been made available previously by the computational resource provider or by the resource itself.

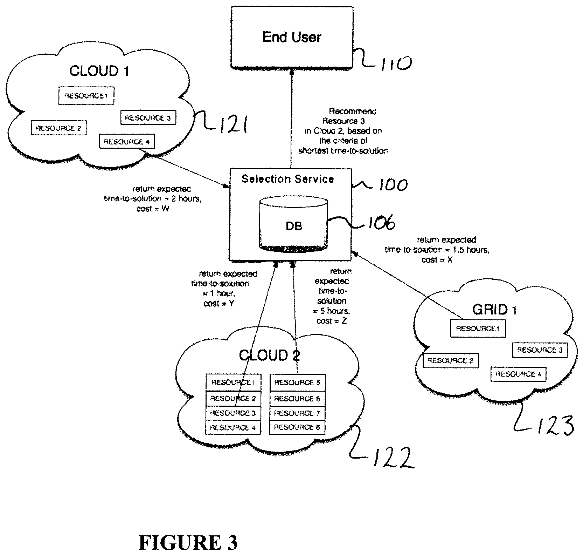

Figure 3 illustrates the distributed computing environment of Figure 2, but is representative of the later method steps. In terms of hardware, Figure 3 specifically illustrates a database 106 as part of the selection service 100. The database may be used as a database of instance-specific performance data.

Once the candidate computing resources have performed the application using the benchmarking input deck, step S105 is performed and performance statistics of the benchmarking process are received by the selection service. The arrows from the resources to the selection service 100 are representative of the transmission of the benchmark performance statistics being transferred over a data connection between each candidate resource and the selection service 100. In Figure 3, the performance statistics are time-to-solution, and cost. The benchmarking performance statistics may include estimates of the corresponding statistic for performing the application instance with the complete set of inputs. Alternatively or additionally, the selection service 100 is configured to extrapolate the benchmark performance statistics to obtain estimated performance statistics of the application instance (the application executed with the full production input deck) e.g., to the total computational time required to perform 10x as many Monte-Carlo trials in the case of application based on Metropolis Monte Carlo sampling or 100000x as many Molecular Dynamics simulation timesteps in the case of a scientific HPC application, depending on the adjustments performed at step S103. Based on the estimated performance statistics, for example estimated time-to-solution which is the sum of (a) extrapolation of benchmark-based performance of the application on the candidate resource and (b) queue wait times on that resource, the selection service 100 is configured to generate a report ranking the performance of the end user's application instance on the set of candidate resources and to provide recommendations to the end user as to the most appropriate resource for the application instance. The recommendation could be based on a selection policy based on one or all of various criteria - for example, (a) time-to-solution, (b) pure computational performance excluding queue wait times, (c) price to performance ratio (d) CO2 footprint, etc. Step S106 is performed by the selection service 100 based on the estimated performance statistics derived from the benchmark performance statistics, and the selection policy.

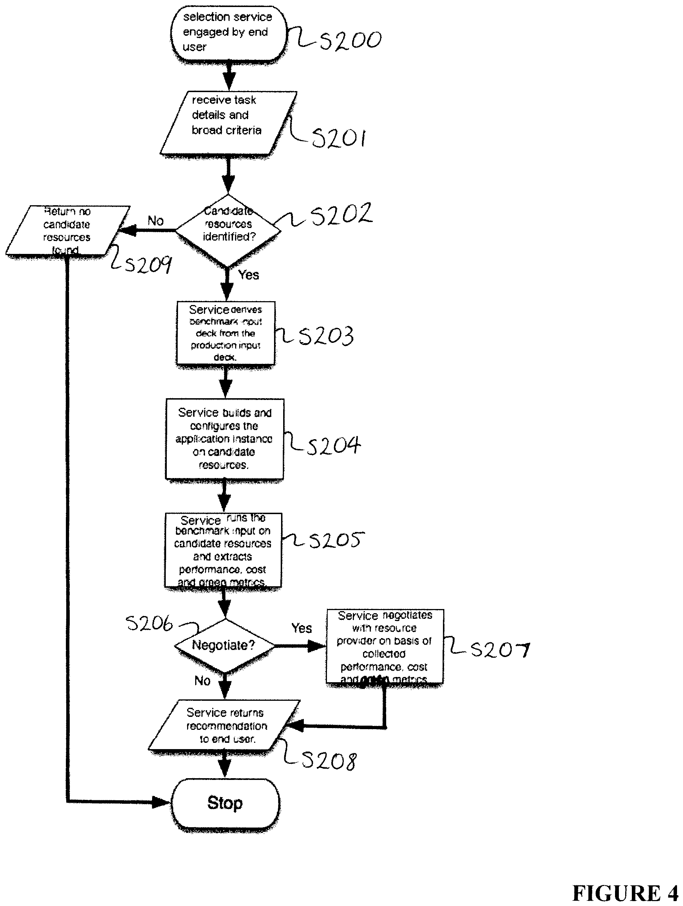

Optionally, as a service or system collects benchmarking performance statistics from one or more candidate computing resources, such as cost values and green computing metrics for the user's application instance on various computational resources, it can negotiate with the resource providers on the behalf of the user to obtain a preferred resource (the particular resource might be preferred due to its geographical location, reputation of the provider, green credentials, etc.) to run the application instance at a lower cost. This is illustrated in Figure 4.

In the flowchart of Figure 4, the first step, S200, is the engaging of the selection service 100 by the end user 110. This may be realised by a message indicating that the end user has a task for which a solution is required, or there may be a dedicated access interface for the selection service.

At step S201, the selection service receives the task details, which in this example include broad selection criteria for candidate computing resources. Step S201 is an example of step S101 of Figure 1. The task details also include a production (or complete) input deck, application source code, build instructions, and a configuration script.

Once the task details are received, the flow proceeds to step S202, at which a check is performed to ascertain whether there are any available computing resources in the network environment which satisfy the broad selection criteria received as part of the task details in step S201.

If no computing resources satisfying the broad selection criteria can be found, then the flow proceeds to step S209, and data is sent from the selection service 100 to the end user 110 indicating that no candidate computing resources have been found. The method then ends.

If computing resources are found that satisfy the broad selection criteria, then the flow proceeds to step S203. Step S203 is an example of a combination of steps S102 and S103 from Figure 1, and is the derivation of a benchmark input deck by the selection service 100 based on the received production input deck. There are several methods by which this derivation can be performed, and some examples are discussed below.

Once the benchmark input deck has been derived, the flow proceeds to step S204. Step S204 is an example of step S104 of Figure 1, and in addition to the transmission of the application source code, benchmark input deck, build instructions, and configuration script, step S204 includes instructing the candidate computing resources to build (or compile) an application executable.

Once the application executable is built at each of the candidate computing resources, the flow proceeds to step S205. Step S205 is an example of step S105 of Figure 1, and includes instructing the candidate computing resources to run the application executable with the benchmarking set of inputs, and receiving the benchmarking performance statistics. Any extrapolation of the received statistics to generate estimated performance statistics for performing the application with the production input deck is also performed in step S205.

The flow may then proceed directly to S208, which is an example of step S106 of Figure 1. Step S208 includes returning an indication of the selected optimum computing resource to the end user 110 as a recommendation. Optionally, as a service or system collects benchmarking performance statistics from one or more candidate computing resources, such as cost values and green computing metrics for the user's application instance on various computational resources, it can negotiate with the resource providers on the behalf of the user to obtain a preferred resource (the particular resource might be preferred due to its geographical location, reputation of the provider, green credentials, etc.) to run the application instance at a lower cost. The decision of whether or not to negotiate is performed after step S205 as step S206. If it is decided not to negotiate, then the flow proceeds to step S208. Otherwise, the negotiation is performed at step S207, and the flow then proceeds to step S208.

Four different methods by which the set of inputs which affect an execution time of the application instance will now be discussed. A set of inputs can include a minimum of a single input. The methods may be used separately or in combination.

In a first method, identifying the set of inputs which affect an execution time includes performing a semantic analysis of the complete set of inputs and identifying those inputs which comprise a parameter name that matches a predefined list of parameter names to within a predetermined error threshold.

A broad class of scientific HPC applications involve a computer experiment where a physical process is simulated for a certain time duration. This simulation time duration is specified in the input deck. Another broad class of scientific HPC applications involve simulating ensembles of calculations where the number of calculations in the ensembles are specified in the input deck. A third class of scientific applications involve running the computation until certain convergence criteria are met, where the convergence criteria is specified in the input deck using specific parameters. Amongst possible adjustments, the adjustment can be reducing numbers of iterations, relaxing convergence thresholds, and reducing temporal durations.

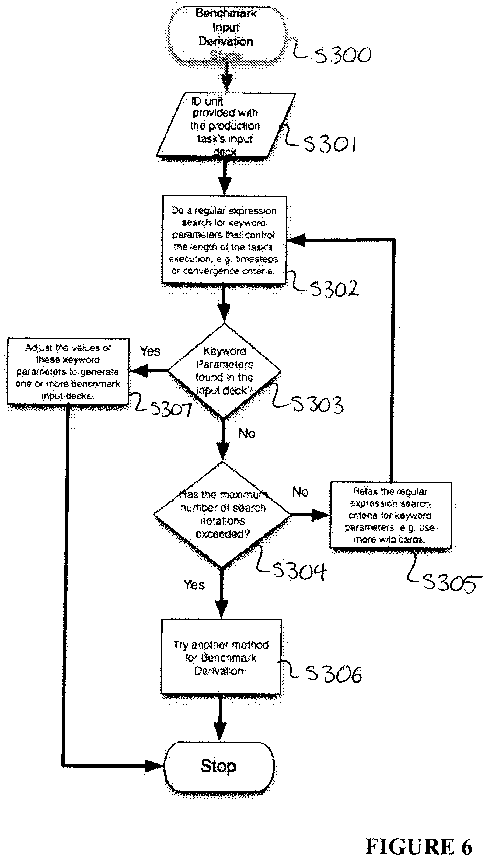

An example of the first method is illustrated by Figure 6. At step S300 the benchmark input derivation starts. The flow then proceeds to step S301. At step S301, the identification unit 102 is provided with the complete set of inputs for the application instance (production task's input deck). The flow then proceeds to step S302.

In step S302, in order to derive a benchmark input deck from the production input deck, STReaM does a regular expression search for keyword parameters that control the length of the task's execution. Such keyword parameters may be stored as a list, which may be application-specific, generic, or include some generic terms and some application-specific terms. The regular expression search is an example of semantic analysis, and takes the form of a scan of the complete input deck for keyword parameters which affect the total execution time of the production task. The search may involve appropriate use of wildcards. At step S303, it is determined whether or not keyword parameters have been found in the complete input deck.

If it is determined that keyword parameters have been found, then the values of these keyword parameters are adjusted at step S307 to generate one or more benchmarking input decks. The nature and extent of the adjustment will depend on the particular implementation of the embodiment, but is done in such a way that the execution time of the application with the benchmark input deck is shorter than it would be for the application with the complete input deck. That is to say, the benchmarking input set generation unit S103 adjusts the values of the keyword parameters so as to reduce the execution time to be short enough for a benchmark run, and generates a new benchmark input deck with the adjusted values.

If it is determined that no keyword parameters have been found, then the flow proceeds to step S304, at which it is determined whether a maximum number of search iterations has been exceeded. If it hasn't, then the flow proceeds to step S305 at which some relaxation of the search terms is carried out, for example using more wildcards so that the extent to which a parameter name must match a listed parameter name is reduced. The flow returns to step S302. If the maximum number of search iterations has been exceeded, then another benchmark derivation method can be performed.

In a second method, identifying the set of inputs which affect an execution time may include finding a first set of variables whose value is set as a direct function of an input from the complete set of inputs, finding a next set of variables whose value is set as a direct function of a variable from the first set of variables, and, if any of the first set of variables or the next set of variables are loop control variables, adding their corresponding inputs to the identified set of inputs, and for a preconfigured number of iterations: defining the next set of variables as a previous set of variables; finding a new next set of variables whose value is set as a direct function of a variable from the previous set of variables, and, if any of the next set of variables are loop control variables, adding their corresponding inputs to the identified set of inputs.

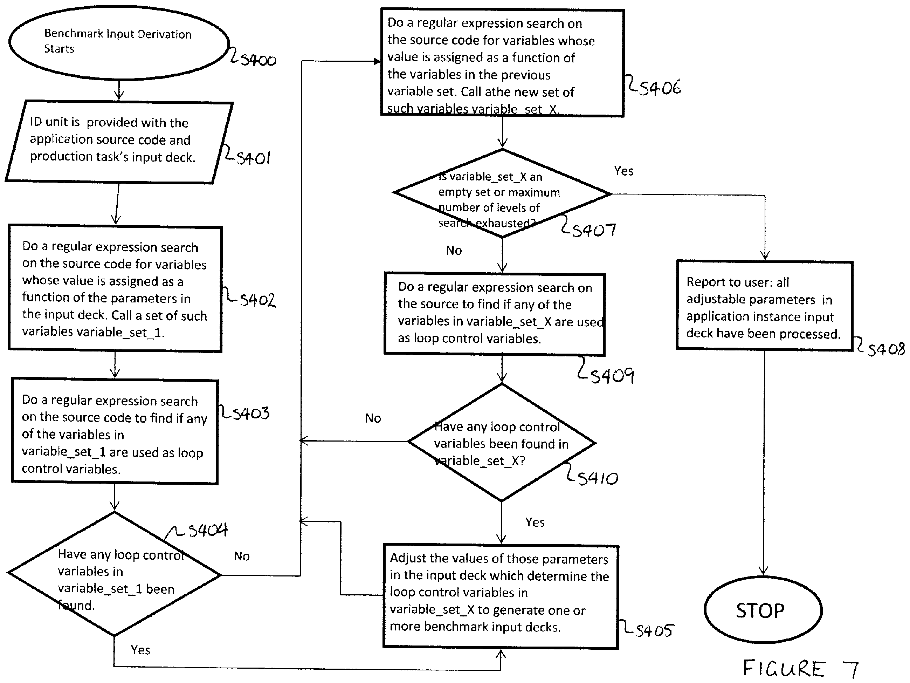

An example of the second method is illustrated in the flowchart of Figure 7. At step S400 the benchmark input derivation starts. The flow then proceeds to step S401. At step S401, the identification unit 102 is provided with the complete set of inputs for the application instance (production task's input deck). The flow then proceeds to step S402.

The identification unit 102 and possibly also the benchmark input set generation unit 103 have access to the application source code and the complete set of inputs (production task's input deck). The identification unit 102 can determine from the input deck and the source code which variables in the source code are set directly using the parameters specified in the input deck. These variables, which are directly set by parameters in the input deck, can be referred to as Variable_Set_1. Then, in S403, the identification unit can do a regular expression search (such as the semantic analysis of the first method) on the source code to determine if variables in Variable_Set_1 act as loop control variables, e.g., a 'for' loop controlled by a variable which holds the timestep value or a 'while' loop which terminates when the error is smaller than a convergence criteria variable in Variable_Set_1.

At step S404 it is determined whether such loop control variable(s) in Variable_Set_1 have been identified. If they have, then the flow proceeds to step S405 at which the benchmark input set generation unit 103 adjusts the corresponding parameters in the input deck, to control the number of loop iterations and in this way derive a benchmark input deck (to which further adjustments may be made). Once the adjustments have been performed, or if no loop control variables were found in Variable_Set_1, the flow proceeds to step S406.

At step S406 another regular expression search is done in the source code, to identify the next set of variables, Variable_Set_2 whose value is a direct function of variables in Variable_Set_1, i.e., which have a second order relation to the parameters in the input deck.

The flow then proceeds to step S407, at which it is considered firstly whether there are any variables in Variable_set_2 and whether "2" is beyond the maximum search level. If there are no variables, or if "2" is beyond the maximum search level, the method ends (possibly including sending a message as in S408). Otherwise, the flow proceeds to step S409, and a regular expression search is performed on the source code to find out if any of the variables in Variable_set_2 are used as loop control variables.

The flow then proceeds to step S410, which checks whether any loop control variables have been found in Variable_set_2. If they have been, then the flow proceeds to step S405, which is detailed above, and then onto step S406. If they have not been, then the flow proceeds to step S406, which is also detailed above. Each time S406 is performed the "level" increases by 1, i.e, the set of variables becomes "Variable_Set_X+1" (where X is the previous level). The loop formed by steps S405 to S410, as illustrated on Figure 7, is repeated until it is determined at step S407 that either no variables have been found in the latest set, ot the maximum number of levels has been exhausted.

As an example of this method in action, consider a molecular dynamics application whose input deck contains a parameter-value pair which is used to set the value of a first variable in the code. The first variable, in turn, is used to set the value of a second variable in the code, which second variable is itself finally used in a 'for' loop to control the number of iterations the molecular dynamics simulation. Once the third variable is detected in a for loop, the identification unit 102 can be sure that reducing the value of the parameter-value pair in the input deck will result in a shorter simulation and can then generate the appropriate benchmark input deck.

A third method of identifying the set of inputs includes using rules from a storage unit to find a set of inputs which affect the execution time of an application instance. For example, for widely used community-standard applications, such as Amber (a Molecular Dynamics code), NWChem (a computational chemistry code), etc., the identification unit 102 can be pre-configured to use rules to derive the benchmark input deck from the complete input deck based on application-specific knowledge. When an input source supplies a complete input deck to an embodiment of the present invention for such known applications, the rules to derive the benchmark input deck can be retrieved and directly applied. The rules may be stored in a database, as an implementation of a finite state machine or using other artificial intelligence techniques. Also, rules learned from the other three methods may also be stored for future use when a different complete input deck is supplied.

A fourth method of identifying the set of inputs also involves using rules. In addition to storing and applying rules as in the third method, the fourth method also includes deriving rules for identifying inputs that affect an execution time of the application instance based on the received complete set of inputs and an example benchmarking set of inputs, and storing the rules in a storage unit.

For example, the input source may provide an example complete + benchmark input deck pair from which the identification unit 102 can use pattern-matching to learn the rules for deriving the benchmark input deck from the complete input deck. The rules are stored and can be applied to new complete input decks that a customer may provide so as to derive the corresponding benchmark input deck.

Additionally, in any of the second to fourth methods, as in the first method, in order to improve the accuracy of the extrapolation of the estimated performance statistics from the benchmark performance statistics, the benchmark input set generation unit 103 can generate multiple benchmark inputs with different values of the identified inputs.

A complete set of inputs may be a numbered list of parameters, each with a name and a value. As an example, an embodiment of the present invention may adjust the value of a parameter with a particular name to be much smaller, for example reduce it from 100000 to 100 in the benchmark set of inputs.

A complete set of inputs may be more complex in its structure, and could include some logic such as "if" conditions.

As a further example, an identified set of inputs may include a convergence threshold, which may then be increased by a factor of 100 in the benchmark set of inputs.

Here, we present an example sequence of steps carried out by invention embodiments for selecting optimal third-party HPC resources and running an ensemble of Molecular Dynamics (MD) simulations. For the ensemble of this example, optimality of a set of candidate resources needs to be globally determined for the entire set of simulations instead of a single simulation. This is because if there is a large disparity between the completion time of the fastest simulation (application instance) on one resource and the completion time of the slowest simulation on another resource, then the overall time-to-solution will be bounded by the slowest simulation.
(a) The end user submits a full production input deck, the source code (including dependencies), build and configuration instructions to the reception unit 101.
(b) The computing resource selection system then instructs the candidate computing resources to dynamically build the application executable from the source code. The initial set of candidate resources can be selected based on a user-defined criteria, such as cost, geographic location, or load. Additionally, for any candidate resource, the service can insert some resource specific optimizations into the Makefile and/or build script if these have been made known by the resource provider.
(c) Once the application executable is built, some configuration can be carried out in accordance with a configuration script based on the user input and/or resource specific configuration options that may have been made known by the resource provider.
(d) Then the benchmark input deck is derived from the full production input deck. The performance of the application with a benchmark input deck is performed on the different candidate resources. The expected simulation runtime for the full production dataset is then extrapolated based on this performance benchmark, e.g., total simulation runtime for the full length of the MD simulation, etc.
(e) The time-to-solution on the candidate resources is then computed as the sum of the expected simulation run-time + expected wait time in the queue.
(f) One potential heuristic to realize ensembles of simulations is for the computing resource selection system to deploy simulations on candidate resources in order of increasing time-to-solution as long as the time-to-solution for the slowest resource is not more than double the time-to-solution for the fastest resource.

If all the simulations in the ensemble are not able to be desirably scheduled on the candidate resources in the first pass then the remaining simulations may be scheduled in a second pass or subsequent passes to arrive at an overall minimized time-to-solution for the entire ensemble. The second/subsequent passes for the remaining simulations in the ensemble would involve repeating steps (e)-(f) for a candidate resource which has already been considered or (a)-(f) if a new resource is included in the set of candidate resources.

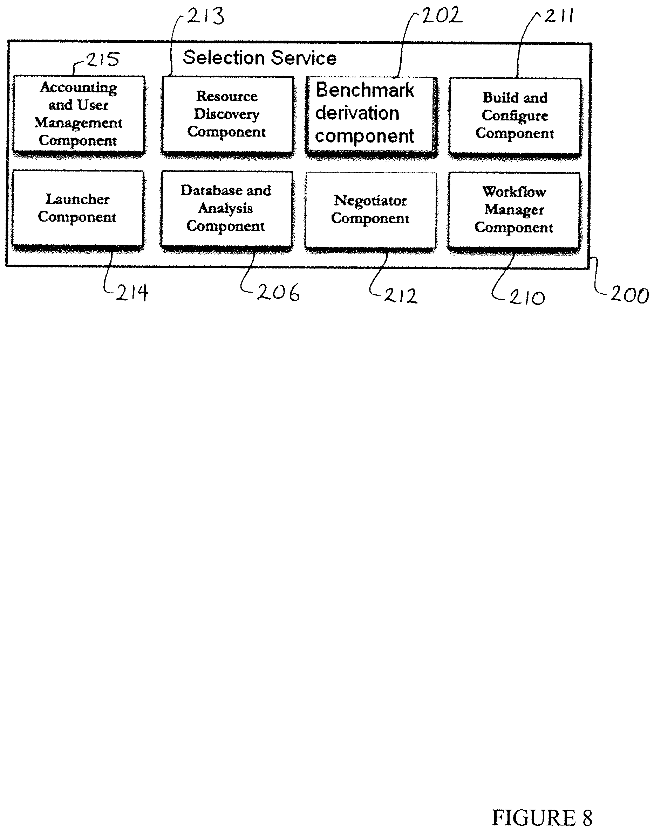

An alternative configuration of a computing resource selection system embodying the present invention is illustrated in Figure 8. The system is a selection service 200 including an accounting and user management component 215, a launcher component 214, a resource discovery component 213, a database and analysis component 206, a benchmark derivation component 202, a negotiator component 212, a build and configure component 211, and a workflow manager component 210.

The accounting and user management component is responsible for the initial engagement with an end user. Optionally, invention embodiments could be embodied in a system in which an end user is required to pay a subscription charge or consultation fee to use the selection service. The accounting and user management component is configured to manage fees and subscriptions.

The resource discovery component 213 is responsible for identifying candidate computing resources in the distributed networking environment, possibly by applying some broad criteria to find a subset of candidate computing resources from the available computing resources.

The benchmark derivation component 202 is configured to perform steps S102 and S103.

The build and configure component 211 may be responsible for compiling application source code into an executable using build instructions, or may be responsible for instructing candidate computing resources to compile an application executable.

The negotiator component 212 is configured to perform negotiations with candidate computing resources or their providers based on received performance statistics. Such negotiations are set out in more detail in the discussion of Figure 4.

The workflow manager component 201 is effectively a control unit which manages the overall procedure from initial engagement to selecting an optimum computing resource.

The launcher component 214 is configured to instruct the selected computing resource to actually start running the application instance. This may (or may not) involve interacting with different types of schedulers that can be in operation, e.g. job submission systems available, on some HPC resources, grids and clouds.

As an additional option, since an embodiment of the present invention could be provided as a centralised service for a number of input sources or end users, it may allocate tasks requiring a large computing capacity on a range of computational resources offered by a plurality of third-party Cloud or grid providers for benchmarking end-user applications. Such a centralised service is better placed than an individual end-user to anticipate future demand on a range of computational resources as well as to consolidate such demand, the service may therefore be able to procure this capacity at a cheaper cost from commercial providers by reserving it in advance.

It should be understood that features of different embodiments, aspects, and examples are applicable to one another, and each recited example, aspect, and embodiment should be considered as having the potential to be combined with the other examples, aspects, and embodiments.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method in distributed network computing, the method comprising, at a computing resource selection system (100):
a reception unit (101) receiving, from an input source, task details of a task to be performed by a computing resource, wherein the task includes running an application with a given set of inputs as an application instance, and the task details include information identifying the application and application source code, and a complete set of inputs specific to the application instance;
an identification unit (102) identifying, from among the complete set of inputs, a set of inputs which affect an execution time of the application instance;
a benchmarking input set generation unit (103) generating a benchmarking set of inputs by adjusting values of the identified set of inputs, wherein the adjusting includes one or more of the following:
if the identified set of inputs include inputs which control how many iterations of a section of code is executed, reducing numbers of iterations of sections of code; and
if a temporal duration of a physical process simulation is specified in the set of inputs, reducing the specified temporal duration;
a transmission unit (104) transmitting the benchmarking set of inputs and the application to a plurality of candidate computing resources for running the application with the benchmarking set of inputs as a benchmarking process;
the reception unit (101) receiving, from the or each of the one or more candidate computing resources, performance statistics of the benchmarking process;
a selection unit (105) selecting an optimum computing resource to run the application instance using the performance statistics from the plurality of candidate computing resources, based on a selection policy, the selection policy being based on one or more of: execution time, time to solution, price to performance ratio, and CO₂ emission levels.

2. A method according to claim 1, further comprising:
transmitting a message identifying the selected optimum computing resource to the input source.

3. A method according to claim 1, further comprising:
transmitting the complete set of inputs to the selected computing resource for running the application instance.

4. A method according to any of the preceding claims, wherein
the performance statistics include time to solution, time to solution being a sum of the queue wait time and the execution time.

5. A method according to any of the preceding claims, wherein
the task includes running a plurality of application instances;
the task details include information identifying an application and application source code for each application, and a complete set of inputs specific to each application instance; and
the identifying, generating, transmitting, receiving, and selecting steps are performed for each application instance in the task.

6. A method according to any of the preceding claims, further comprising:
at the computing resource selection system (100):
generating at least one additional benchmarking set of inputs;
transmitting the at least one additional benchmarking set of inputs to the one or more candidate computing resources for benchmarking;
receiving, from the or each of the one or more candidate computing resources, additional performance statistics for each of the at least one additional benchmarking set of inputs;
using the additional performance statistics along with the performance statistics to select an optimum computing resource.

7. A method according to any of the preceding claims, wherein
identifying the set of inputs which affect an execution time includes performing a semantic analysis of the complete set of inputs and identifying those inputs which comprise a parameter name which matches a predefined list of parameter names to within a predetermined error threshold.

8. A method according to any of the preceding claims, wherein
identifying the set of inputs which affect an execution time includes:
finding a first set of variables whose value is set directly using inputs from the complete set of inputs;
finding a next set of variables whose value is set as a direct function of a variable from the first set of variables, and, if any of the first set of variables or the next set of variables are loop control variables, adding their corresponding inputs to the identified set of inputs; and
for a preconfigured number of iterations:
defining the next set of variables as a previous set of variables;
finding a new next set of variables whose value is set as a direct function of a variable from the previous set of variables, and, if any of the next set of variables are loop control variables, adding their corresponding inputs to the identified set of inputs.

9. A method according to any of the preceding claims, wherein
the computing resource selection system (100) has a storage unit (106) for storing rules for identifying inputs which affect the execution time of an application instance from among a complete set of inputs; and
identifying the set of inputs includes using rules from the storage unit (106) to find a set of inputs which affect the execution time of an application instance.

10. A method according to claim 9, wherein:
the task details include an example benchmarking set of inputs;
the method further comprising, at the computing resource selection system (100):
deriving rules for identifying inputs that affect an execution time of the application instance based on the received complete set of inputs and example benchmarking set of inputs; and
storing the rules in the storage unit (106).

11. A method according to claim 10, further comprising:
at the computing resource selection system (100):
building the application using the application source code and build instructions,
including configuring the application for the specification of the candidate computing resource.

12. A method according to claim 11, wherein:
the computing resource selection system (100) is operable to configure the application for different computing resource specifications.

13. A computing resource selection system (100) configured to operate in a distributed computing environment, the computing resource selection system comprising:
a reception unit (101) configured to receive, from an input source, task details of a task to be performed by a computing resource, wherein the task includes running an application with a given set of inputs as an application instance, and the task details include information identifying the application and application source code, and a complete set of inputs specific to the application instance;
an identification unit (102) configured to identify, from among the complete set of inputs, a set of inputs which affect an execution time of the application instance;
a benchmarking input set generation unit (103) configured to generate a benchmarking set of inputs by adjusting values of the identified set of inputs, wherein the adjusting includes one or more of the following:
if the identified set of inputs include inputs which control how many iterations of a section of code is executed, reducing numbers of iterations of sections of code; and
if a temporal duration of a physical process simulation is specified in the set of inputs, reducing the specified temporal duration;
a transmission unit (104) configured to transmit the benchmarking set of inputs and the application to a plurality of candidate computing resources for running the application with the benchmarking set of inputs as a benchmarking process; wherein
the reception unit (101) is also configured to receive, from the or each of the one or more candidate computing resources, performance statistics of the benchmarking process; the computing resource selection system (100) further comprising:
a selection unit (105) configured to select an optimum computing resource to run the application instance using the performance statistics from the plurality of candidate computing resources, based on a selection policy the selection policy being based on one or more of: execution time, time to solution, price to performance ratio, and CO₂ emission levels.

14. A computer program which, when run by a computing apparatus in a distributed computing environment, causes the computing apparatus to perform a method according to any of claims 1 to 12.

## Patentansprüche

1. Verfahren im verteilten Netzwerk-Computing, wobei das Verfahren an einem Rechenressourcen-Auswahlsystem (100) umfasst:
eine Empfangseinheit (101), die von einer Eingabequelle Aufgabendetails einer Aufgabe erhält, die von einer Rechenressource auszuführen sind, wobei die Aufgabe das Ausführen einer Anwendung mit einem vorgegebenen Satz von Eingaben als eine Applikationsinstanz umfasst,
und die Aufgabendetails Informationen enthalten, die die Anwendung und Anwendungs-Quellcode enthalten und einen vollständigen Satz von für die Anwendungsinstanz spezifischen Eingaben;
eine Identifikationseinheit (102) zum Identifizieren aus einem vollständigen Eingabesatz eines Eingabesatzes, der sich auf eine Ausführungszeit der Anwendungsinstanz auswirkt;
eine Benchmarking-Eingabesatz-Erzeugungseinheit (103) zum Erzeugen eines Eingabesatzes durch Angleichen der Werte des identifizierten Eingabesatzes, wobei das Angleichen eines oder mehrere des Folgenden umfasst:
falls der identifizierte Eingabesatz Eingaben enthält, die steuern, wie viele Iterationen eines Codeabschnitts ausgeführt werden, Reduzieren der Anzahl der Iterationen der Codeabschnitte; und
falls in dem Eingabesatz eine zeitliche Dauer einer physikalischen Prozesssimulation spezifiziert ist, Reduzieren der spezifizierten zeitlichen Dauer;
eine Übertragungseinheit (104) zum Übertragen des Benchmarking-Eingabesatzes und der Anwendung an mehrere Kandidaten-Rechenressourcen zum Ausführen der Anwendung mit dem Benchmarking-Eingabesatz als einen Benchmarkingprozess;
Empfangen durch die Empfangseinheit (101) von den oder jedem einzelnen der einen oder der mehreren Kandidaten-Rechenressourcen von Leistungsstatistiken des Benchmarkingprozesses; eine Auswahleinheit (105) zum Auswählen einer optimalen Rechenressource zum Ausführen der Anwendungsinstanz unter Verwendung der Leistungsstatistiken aus den mehreren Kandidaten-Rechenressourcen auf Grundlage einer Auswahlrichtlinie, wobei die Auswahlrichtlinie auf einem oder mehreren beruht von: Ausführungszeit, Zeit bis Lösung, Preis-zu-Leistungs-Verhältnis und C02-Emissionswerte.

2. Verfahren nach Anspruch 1, ferner umfassend:
Übertragen einer Nachricht, die die ausgewählte optimale Rechenressource identifiziert, an die Eingabequelle.

3. Verfahren nach Anspruch 1, ferner umfassend:
Übertragen des vollständigen Eingabesatzes an die ausgewählte Rechenressource zum Ausführen der Applikationsinstanz.

4. Verfahren nach einem der vorstehenden Ansprüche, wobei
die Leistungsstatistiken eine Zeit bis Lösung enthalten, wobei die Zeit bis Lösung eine Summe der Warteschlangenwartezeit und der Ausführungszeit ist.

5. Verfahren nach einem der vorstehenden Ansprüche, wobei
die Aufgabe das Ausführen mehrerer Anwendungsinstanzen umfasst;
die Aufgabendetails Informationen, die eine Anwendung und einen Anwendungs-Quellcode für jede Anwendung und einen vollständigen Eingabesatz spezifisch für jede Anwendungsinstanz enthalten; und
die Schritte des Identifizierens, Erzeugens, Übertragens, Empfangens und Auswählens für jede Anwendungsinstanz in der Aufgabe durchgeführt werden.

6. Verfahren nach einem der vorstehenden Ansprüche, ferner umfassend:
an dem Rechenressourcen-Auswahlsystem (100):
Erzeugen von mindestens einem zusätzlichen Benchmarking-Eingabeset;
Übertragen des mindestens einen zusätzlichen Benchmarking-Eingabeset an die eine oder mehreren Kandidaten-Rechenressourcen zum Benchmarking;
Empfangen von dem oder jedem einzelnen der einen oder der mehreren Kandidaten-Rechenressourcen zusätzlicher Leistungsstatistiken für jeden des mindestens einen zusätzlichen Benchmarking-Eingabesatzes;
Verwenden der zusätzlichen Leistungsstatistiken zusammen mit den Leistungsstatistiken zur Auswahl einer optimalen Computerressource.

7. Verfahren nach einem der vorstehenden Ansprüche, wobei
das Identifizieren des Eingabesatzes, der sich auf eine Ausführungszeit auswirkt, das Ausführen einer semantischen Analyse des vollständigen Eingabesatzes umfasst, und das Identifizieren der Eingaben, die einen Parameternamen umfassen, der einer vorgegebenen Liste von Parameternamen innerhalb einer vorgegebenen Fehlerschwelle entspricht.

8. Verfahren nach einem der vorstehenden Ansprüche, wobei
das Identifizieren des Eingabesatzes, der sich auf eine Ausführungszeit auswirkt, umfasst:
das Finden eines ersten Satzes von Variablen, deren Wert direkt unter Verwendung der Eingaben aus dem vollständigen Eingabesatz festgelegt wird;
das Finden eines nächsten Satzes von Variablen, deren Wert als eine direkte Funktion einer Variablen aus dem ersten Satz von Variablen festgelegt wird, und, falls der erste Satz von Variablen oder der nächste Satz von Variablen Schleifensteuerungsvariablen sind, Hinzufügen ihrer entsprechenden Eingaben zu dem identifizierten Eingabesatz; und
für eine vorkonfigurierte Anzahl von Iterationen:
Definieren des nächsten Satzes von Variablen als einen vorherigen Satz von Variablen;
das Finden eines neuen nächsten Satzes von Variablen, deren Wert als eine direkte Funktion einer Variablen aus dem vorherigen Satz von Variablen festgelegt wird, und, falls welche des nächsten Satzes von Variablen Schleifensteuerungsvariablen sind, Hinzufügen ihrer entsprechenden Eingaben zu dem identifizierten Eingabesatz.

9. Verfahren nach einem der vorstehenden Ansprüche, wobei
das Rechenressourcenauswahlsystem (100) über eine Speichereinheit (106) zum Speichern von Regeln für das Identifizieren von Eingaben, die sich auf die Ausführungszeit einer Anwendungsinstanz auswirken, aus einem vollständigen Eingabesatz, verfügt; und
das Identifizieren des Eingabesatzes das Verwenden von Regeln aus der Speichereinheit (106) zum Finden eines Eingabesatzes, der sich auf die Ausführungszeit einer Anwendungsinstanz auswirkt, umfasst.

10. Verfahren nach Anspruch 9, wobei:
die Aufgabendetails einen beispielhaften Benchmarking-Eingabesatz enthalten;
das Verfahren an dem Rechenressourcenauswahlsystem (100) ferner umfasst:
das Ableiten von Regeln zum Identifizieren von Eingaben, die sich auf die Ausführungszeit der Anwendungsinstanz auswirken, auf Grundlage des empfangenen, vollständigen Eingabesatzes und des beispielhaften Benchmarking-Eingabesatzes; und
Speichern der Regeln in der Speichereinheit (106).

11. Verfahren nach Anspruch 10, ferner umfassend:
an dem Rechenressourcen-Auswahlsystem (100):
Erstellen der Anwendung unter Verwendung des Anwendungs-Quellcodes und Erstellen der Anweisungen,
einschließlich des Konfigurierens der Anwendung für die Spezifikation der Kandidaten-Rechenressource.

12. Verfahren nach Anspruch 11, wobei:
das Rechenressourcenauswahlsystem (100) betreibbar ist, um die Anwendung für unterschiedliche Rechenressourcenspezifikatione zu konfigurieren.

13. Rechenressourcenauswahlsystem (100) konfiguriert dafür, in einem verteilten Rechenumfeld zu arbeiten, wobei das Rechenressourcenauswahlsystem umfasst:
eine Empfangseinheit (101), konfiguriert dafür, von einer Eingabequelle Aufgabendetails einer Aufgabe zu erhalten, die von einer Rechenressource auszuführen sind, wobei die Aufgabe das Ausführen einer Anwendung mit einem vorgegebenen Satz von Eingaben als eine Anwendungsinstanz umfasst, und die Aufgabendetails Informationen enthalten, die die Anwendung und den Anwendungs-Quellcode enthalten und einen vollständigen Satz von für die Applikationsinstanz spezifischen Eingaben;
eine Identifikationseinheit (102), die dafür konfiguriert ist, aus einem vollständigen Eingabesatz einen Eingabesatz zu identifizieren, der sich auf die Ausführungszeit der Anwendungsinstanz auswirkt;
eine Benchmarking-Eingabesatz-Erzeugungseinheit (103) die konfiguriert ist für das Erzeugen eines Eingabesatzes durch Angleichen der Werte des identifizierten Eingabesatzes, wobei das Angleichen eines oder mehrere des Folgenden umfasst:
falls der identifizierte Eingabesatz Eingaben enthält, die steuern, wie viele Iterationen eines Codeabschnitts ausgeführt werden, Reduzieren der Anzahl der Iterationen des Codeabschnitts; und
falls eine zeitliche Dauer einer physikalischen Prozesssimulation in dem Eingabesatz spezifiziert ist, Reduzieren der spezifizierten zeitlichen Dauer;
eine Übertragungseinheit (104), konfiguriert für das Übertragen der Benchmarking-Eingabesätze und die Anwendung auf mehrere Kandidaten-Rechenressourcen zum Ausführen der Anwendung mit dem Benchmarking-Eingabesatz als einen Benchmarkingprozess; wobei die Empfangseinheit (101) auch dafür konfiguriert ist, von der oder jeder einzelnen der einen oder der mehreren Kandidaten-Rechenressourcen Leistungsstatistiken des Benchmarkingprozesses zu erhalten; wobei das Rechenressourcenauswahlsystem (100) ferner umfasst:
eine Auswahleinheit (105) konfiguriert für das Auswählen einer optimalen Rechenressource zum Ausführen der Anwendungsinstanz unter Verwendung der Leistungsstatistiken aus den mehreren Kandidaten-Rechenressourcen auf Grundlage einer Auswahlrichtlinie, wobei die Auswahlrichtlinie auf einem oder mehreren beruht von: Ausführungszeit, Zeit bis Lösung, Preis-zu-Leistungs-Verhältnis und CO₂-Emissionswerte.

14. Computerprogramm, das, wenn es von einer Rechenvorrichtung in einem verteilten Rechenumfeld ausgeführt wird, veranlasst, dass die Rechenvorrichtung ein Verfahren gemäß einem der Ansprüche 1 bis 12 ausführt.

## Revendications

1. Procédé mis en oeuvre dans environnement informatique de réseau distribué, le procédé comprenant, au niveau d'un système de sélection de ressources informatiques (100) :
une unité de réception (101) recevant, en provenance d'une source d'entrée, des détails de tâche d'une tâche devant être mise en oeuvre par une ressource informatique, dans lequel la tâche consiste à exécuter une application avec un ensemble donné d'entrées, sous la forme d'une instance d'application, et les détails de tâche incluent des informations identifiant l'application et un code source d'application, et un ensemble complet d'entrées spécifique à l'instance d'application ;
une unité d'identification (102) identifiant, parmi l'ensemble complet d'entrées, un ensemble d'entrées affectant un temps d'exécution au niveau de l'instance d'application ;
une unité de génération d'ensemble d'évaluation comparative d'entrées (103) générant un ensemble d'évaluation comparative d'entrées en ajustant des valeurs de l'ensemble identifié d'entrées, dans lequel l'étape d'ajustement inclut une ou plusieurs des étapes ci-dessous consistant à :
si l'ensemble identifié d'entrées inclut des entrées qui commandent les nombres d'itérations d'une section de code devant être exécutés, réduire des nombres d'itérations de sections de code ; et
si une durée temporelle d'une simulation de processus physique est spécifiée dans l'ensemble d'entrées, réduire la durée temporelle spécifiée ;
une unité de transmission (104) transmettant l'ensemble d'évaluation comparative d'entrées et l'application à une pluralité de ressources informatiques candidates pour exécuter l'application avec l'ensemble d'évaluation comparative d'entrées, sous la forme d'un processus d'évaluation comparative ;
l'unité de réception (101) recevant, en provenance de ladite/desdites ou de chacune de ladite une ou desdites plusieurs ressources informatiques candidates, des statistiques de performance du processus d'évaluation comparative ;
une unité de sélection (105) sélectionnant une ressource informatique optimale pour exécuter l'instance d'application en utilisant les statistiques de performance provenant de la pluralité de ressources informatiques candidates, sur la base d'une politique de sélection, la politique de sélection étant basée sur un ou plusieurs des éléments suivants : un temps d'exécution, un temps de résolution, un rapport prix-performances » et des niveaux d'émission de CO₂.

2. Procédé selon la revendication 1, comprenant en outre l'étape ci-dessous consistant à :
transmettre un message identifiant la ressource informatique optimale sélectionnée à la source d'entrée.

3. Procédé selon la revendication 1, comprenant en outre l'étape ci-dessous consistant à :
transmettre l'ensemble complet d'entrées à la ressource informatique sélectionnée pour exécuter l'instance d'application.

4. Procédé selon l'une quelconque des revendications précédentes, dans lequel
les statistiques de performance incluent un temps de résolution, le temps de résolution correspondant à une somme du temps d'attente en file d'attente et du temps d'exécution.

5. Procédé selon l'une quelconque des revendications précédentes, dans lequel
la tâche inclut l'exécution d'une pluralité d'instances d'application ;
les détails de tâche incluent des informations identifiant une application et un code source d'application pour chaque application, et un ensemble complet d'entrées spécifique à chaque instance d'application ; et
les étapes d'identification, de génération, de transmission, de réception et de sélection sont mises en oeuvre pour chaque instance d'application dans la tâche.

6. Procédé selon l'une quelconque des revendications précédentes, comprenant en outre les étapes ci-dessous consistant à :
au niveau du système de sélection de ressources informatiques (100) :
générer au moins un ensemble supplémentaire d'évaluation comparative d'entrées ;
transmettre ledit au moins un ensemble supplémentaire d'évaluation comparative d'entrées à ladite une ou auxdites plusieurs ressources informatiques candidates, à des fins d'évaluation comparative ;
recevoir, en provenance de ladite/desdites ou de chacune de ladite une ou desdites plusieurs ressources informatiques candidates, des statistiques de performance supplémentaires pour chaque entrée dudit au moins un ensemble supplémentaire d'évaluation comparative d'entrées ;
utiliser les statistiques de performance supplémentaires conjointement avec les statistiques de performance en vue de sélectionner une ressource informatique optimale.

7. Procédé selon l'une quelconque des revendications précédentes, dans lequel
l'étape d'identification de l'ensemble d'entrées affectant un temps d'exécution inclut l'étape consistant à mettre en oeuvre une analyse sémantique de l'ensemble complet d'entrées et à identifier ces entrées qui comportent un nom de paramètre qui correspond à une liste prédéfinie de noms de paramètres dans un seuil d'erreur prédéterminé.

8. Procédé selon l'une quelconque des revendications précédentes, dans lequel
l'étape d'identification de l'ensemble d'entrées affectant un temps d'exécution inclut les étapes ci-dessous consistant à :
rechercher un premier ensemble de variables dont la valeur est définie directement en utilisant les entrées provenant de l'ensemble complet d'entrées ;
rechercher un ensemble successif de variables dont la valeur est définie comme une fonction directe d'une variable du premier ensemble de variables et, si l'une quelconque des variables du premier ensemble de variables et des variables de l'ensemble successif de variables correspond à des variables de commande de boucle, ajouter leurs entrées correspondantes à l'ensemble identifié d'entrées ; et
pour un nombre préconfiguré d'itérations :
définir l'ensemble successif de variables en qualité d'ensemble précédent de variables ;
rechercher un nouvel ensemble successif de variables dont la valeur est définie comme une fonction directe d'une variable de l'ensemble précédent de variables et, si des variables quelconques de l'ensemble successif de variables correspondent à des variables de commande de boucle, ajouter leurs entrées correspondantes à l'ensemble identifié d'entrées.

9. Procédé selon l'une quelconque des revendications précédentes, dans lequel
le système de sélection de ressources informatiques (100) présente une unité de stockage (106) destinée à stocker des règles visant à identifier des entrées qui affectent le temps d'exécution d'une instance d'application parmi un ensemble complet d'entrées ; et
l'étape d'identification de l'ensemble d'entrées inclut l'étape consistant à utiliser des règles provenant de l'unité de stockage (106) en vue de rechercher un ensemble d'entrées affectant le temps d'exécution d'une instance d'application.

10. Procédé selon revendication 9, dans lequel :
les détails de tâche incluent un ensemble exemplaire d'évaluation comparative d'entrées ;
le procédé comprenant en outre, au niveau du système de sélection de ressources informatiques (100), les étapes ci-dessous consistant à :
dériver des règles visant à identifier des entrées qui affectent un temps d'exécution de l'instance d'application, sur la base de l'ensemble complet reçu d'entrées et de l'ensemble exemplaire d'évaluation comparative d'entrées ; et
stocker les règles dans l'unité de stockage (106).

11. Procédé selon la revendication 10, comprenant en outre :
au niveau du système de sélection de ressources informatiques (100), l'étape ci-dessous consistant à :
concevoir l'application en utilisant le code source d'application et des instructions de conception, et notamment configurer l'application pour la spécification de la ressource informatique candidate.

12. Procédé selon la revendication 11, dans lequel :
le système de sélection de ressources informatiques (100) est exploitable de manière à configurer l'application pour différentes spécifications de ressources informatiques.

13. Système de sélection de ressources informatiques (100) configuré de manière à fonctionner dans un environnement informatique distribué, le système de sélection de ressources informatiques comprenant :
une unité de réception (101) configurée de manière à recevoir, en provenance d'une source d'entrée, des détails de tâche d'une tâche devant être mise en oeuvre par une ressource informatique, dans lequel la tâche consiste à exécuter une application avec un ensemble donné d'entrées, sous la forme d'une instance d'application, et les détails de tâche incluent des informations identifiant l'application et un code source d'application, et un ensemble complet d'entrées spécifique à l'instance d'application ;
une unité d'identification (102) configurée de manière à identifier, parmi l'ensemble complet d'entrées, un ensemble d'entrées affectant un temps d'exécution de l'instance d'application ;
une unité de génération d'ensemble d'évaluation comparative d'entrées (103) configurée de manière à générer un ensemble d'évaluation comparative d'entrées en ajustant des valeurs de l'ensemble identifié d'entrées, dans lequel l'étape d'ajustement inclut une ou plusieurs des étapes ci-dessous consistant à :
si l'ensemble identifié d'entrées inclut des entrées qui commandent les nombres d'itérations d'une section de code devant être exécutés, réduire des nombres d'itérations de sections de code ; et
si une durée temporelle d'une simulation de processus physique est spécifiée dans l'ensemble d'entrées, réduire la durée temporelle spécifiée ;
une unité de transmission (104) configurée de manière à transmettre l'ensemble d'évaluation comparative d'entrées et l'application à une pluralité de ressources informatiques candidates pour exécuter l'application avec l'ensemble d'évaluation comparative d'entrées, sous la forme d'un processus d'évaluation comparative ; dans lequel
l'unité de réception (101) est en outre configurée de manière à recevoir, en provenance de ladite/desdites ou de chacune de ladite une ou desdites plusieurs ressources informatiques candidates, des statistiques de performance du processus d'évaluation comparative ; le système de sélection de ressources informatiques (100) comportant en outre :
une unité de sélection (105) configurée de manière à sélectionner une ressource informatique optimale pour exécuter l'instance d'application en utilisant les statistiques de performance provenant de la pluralité de ressources informatiques candidates, sur la base d'une politique de sélection, la politique de sélection étant basée sur un ou plusieurs des éléments suivants : un temps d'exécution, un temps de résolution, un rapport « prix-performances » et des niveaux d'émission de CO₂.

14. Programme informatique qui, lorsqu'il est exécuté par un appareil informatique dans un environnement informatique distribué, amène l'appareil informatique à mettre en oeuvre le procédé selon l'une quelconque des revendications 1 à 12.
